# EUROPÄISCHE PATENTSCHRIFT

(11) **EP 2 337 668 B1**
(45) Veröffentlichungstag und Bekanntmachung des Hinweises auf die Patenterteilung: **20.03.2013**
(21) Anmeldenummer: 08874981.7
(22) Anmeldetag: 20.10.2008
(51) Int. Cl.: B29C 67/00, A61C 13/00

(54) **VERFAHREN UND VORRICHTUNG ZUR VERARBEITUNG VON LICHTPOLYMERISIERBAREM MATERIAL ZUM SCHICHTWEISEN AUFBAU EINES FORMKÖRPERS**
METHOD AND DEVICE FOR PROCESSING LIGHT-POLYMERIZABLE MATERIAL FOR BUILDING UP AN OBJECT IN LAYERS
PROCÉDÉ ET DISPOSITIF DE TRAITEMENT DE MATÉRIAU POLYMÉRISABLE À LA LUMIÈRE POUR CONFECTIONNER PAR COUCHES UN CORPS MOULÉ

(43) Veröffentlichungstag der Anmeldung: 29.06.2011
(73) Patentinhaber: Technische Universität Wien, 1040 Wien (AT); Ivoclar Vivadent AG, 9494 Schaan (LI)
(72) Erfinder: LISKA, Robert, A-2123 Schleinbach (AT); PATZER, Johannes, A-1110 Wien (AT); STAMPFL, Jürgen, A-1050 Wien (AT); WACHTER, Wolfgang, FL-9494 Schaan (LI); APPERT, Christoph, FL-9470 Vaduz (LI)
(74) Vertreter: UEXKÜLL & STOLBERG
(86) Internationale Anmeldenummer: PCT/EP2008/008866
(87) Internationale Veröffentlichungsnummer: WO 2010/045951

(56) Entgegenhaltungen:
- DE-A1- 19 953 000
- DE-A1-102007 006 478
- US-A- 4 752 498
- US-A- 5 496 682
- US-A- 5 876 550

## Beschreibung

Die Erfindung betrifft ein Verfahren zur Verarbeitung von lichtpolymerisierbarem Material zum schichtweisen Aufbau eines Formkörpers unter Anwendung einer lithographiebasierten generativen Fertigungstechnik (Rapid Prototyping), bei dem lichtpolymerisierbares Material auf einer Bauplattform in einer Schicht mit vorgegebener Geometrie in einem Belichtungsfeld durch Belichten polymerisiert wird, die Bauplattform zur Bildung einer nachfolgenden Schicht verschoben wird, lichtpolymerisierbares Material auf die zuletzt gebildete Schicht nachgeführt wird, und durch Wiederholen der vorhergehenden Schritte schichtweise der Formkörper in der gewünschten Form, die sich aus der Folge der Schichtgeometrien ergibt, aufgebaut wird, wobei zumindest bei der Polymerisation der ersten Schicht direkt an der Bauplattform eine Einstrahlung von Licht von der der Seite mit der ersten zu polymerisierenden Schicht gegenüberliegenden Seite der Bauplattform erfolgt, wobei die Bauplattform zumindest teilweise lichtdurchlässig ausgeführt ist.

Die Erfindung ist insbesondere auf den Aufbau von Formkörpern gerichtet, die für Dentalrestaurationen verwendet werden sollen.

CAD-CAM-Technologien haben in der Dentalbranche schon seit einiger Zeit Einzug gehalten und lösen die traditionelle handwerkliche Herstellung von Zahnersatz ab. Die heute üblichen abtragenden Herstellungsverfahren zur Erzeugung von keramischen Dentalrestaurationskörpern haben aber einige Nachteile, die nach heutigem Stand der Technik mit vernünftigem Aufwand unter wirtschaftlichen Aspekten nicht verbessert werden können. In diesem Zusammenhang können aufbauende Herstellungsverfahren, die unter der Bezeichnung "rapid prototyping" (schnelle Prototypenbauweise) in Betracht gezogen werden, insbesondere stereolithographische Verfahren, bei denen jeweils eine neu aufgetragene Materialschicht durch ortsselektive Belichtung in der gewünschten Form polymerisiert wird, wodurch sukzessive durch schichtweise Formgebung der gewünschte Körper in seiner dreidimensionalen Form, die sich aus der Aufeinanderfolge der aufgebrachten Schichten ergibt, hergestellt wird.

In Bezug auf keramikgefüllte Polymere ist insbesondere WO 98/06560 zu nennen. Dabei wird ein keramischer Schlicker über eine dynamische Maske (Lichtmodulator) belichtet, wodurch sukzessive ein dreidimensionaler Körper aufgebaut werden soll. Bei dem beschriebenen Verfahren wird der keramischer Schlicker von oben auf einer Bauplattform belichtet. Bei einer solchen Belichtung von oben muss nach jeder Belichtung mit Hilfe einer Rakel eine neue dünne Materialschicht aufgetragen werden (typischerweise mit einer Schichtdicke, die zwischen 10 und 100 µm liegt). Bei Verwendung höher viskoser Materialien, wie dies keramikgefüllte Harze sind, können solche dünnen Schichten jedoch nur schwer in reproduzierbarer Weise aufgetragen werden.

Im Stand der Technik sind auch, jedenfalls für Photomonomere ohne Keramikfüllung, Techniken bekannt, bei denen die Belichtung von unten durch den Boden einer Wanne hindurch, der mit einer transparenten Folie, Platte oder Platte mit einer elastomeren Oberfläche (z.B. aus Silikon oder Fluorelastomer) ausgeführt ist, erfolgt. Über der transparenten Folie oder Platte befindet sich eine Bauplattform, die von einem Hubmechanismus in einstellbarer Höhe über der Folie oder Platte gehalten wird. Im ersten Belichtungsschritt wird das Photopolymer zwischen Folie und der Bauplattform in der gewünschten Form durch Belichten polymerisiert. Beim Anheben der Bauplattform löst sich die polymerisierte erste Schicht von der Folie oder Platte und flüssiges Monomer fließt in den entstehenden Spalt nach. Durch sukzessives Anheben der Bauplattform und selektive Belichtung des nachgeflossenen Monomermaterials entsteht der schichtweise polymerisierte Formkörper. Eine zur Anwendung dieses Verfahrens geeignete Vorrichtung ist zum Beispiel in DE 199 57 370 A1 beschrieben, auf der die Oberbegriffen von Anspruch 1 und 20 beruhen. Eine ähnliche Verfahrensweise ist in DE 102 56 672 A1 beschrieben, die sich jedoch ebenfalls auf ungefüllte Polymere bezieht.

Bei der Verarbeitung keramikgefüllter Photopolymere stellen sich gegenüber der Verarbeitung von ungefüllten Photopolymeren folgende Probleme:
- Die Grünfestigkeit der polymerisierten Körper ist deutlich geringer (kleiner 10 MPa) als die Festigkeit eines ungefüllten Polymers (typischerweise ca. 20 bis 60 MPa). Dadurch ist der keramikgefüllte Photopolymerkörper mechanisch deutlich weniger belastbar (z.B. beim Abtrennen der zuletzt gebildeten Schicht von der Platte bzw. Folie, durch die hindurch von unten belichtet wurde).
- Durch den hohen Anteil an Keramikpartikeln kommt es zu ausgeprägter Lichtstreuung, und die Eindringtiefe des verwendeten Lichtes ist deutlich reduziert. Damit verbunden ist eine ungleichmäßige Polymerisation in z-Richtung (Strahlungsrichtung) bei Schichtdicken von mehr als 20 µm. Durch die geringe Eindringtiefe ist es auch schwierig, eine zuverlässige Haftung der ersten Schicht direkt an der Bauplattform zu erreichen. Bei keramikgefüllten Monomermaterial kann jedoch nicht gewährleistet werden, dass die anfängliche Startschicht ausreichend dünn ist (z.B. kleiner als 75 µm). Somit ließe sich auch bei sehr langer Belichtung der ersten Schicht eine reproduzierbare Haftkraft an der Bauplattform nicht gewährleisten.

- Im Vergleich zu ungefüllten Photopolymeren sind keramikgefüllte photopolymerisierbare Materialien deutlich viskoser. Dies stellt erhöhte Anforderungen an den verwendeten Beschichtungsmechanismus. Insbesondere kann die Zeit, die bis zum Nachfließen von keramikgefülltem Photopolymer nach Anheben der Bauplattform benötigt wird, erheblich länger sein. Auch stellt das Anheben und Absenken der Bauplattform in einem hochviskosen Photopolymermaterial erhöhte Anforderungen, um Beschädigungen des Bauteils zu vermeiden.
- Aufgrund der hohen Grundviskosität sind keramikgefüllte Photopolymere empfindlicher hinsichtlich Gelierung durch Streulicht oder Umgebungslicht. Bereits kleine Lichtintensitäten sind ausreichend, um durch die stattfindende Polymerisation die Viskosität des Materials über die zulässige Grenze anzuheben.

Der Oberbegriff von Anspruch 1 basiert auf US 4 752 498 A. Bei der Ausführungsform nach Fig. 2 kann die durchsichtige Platte als Bauplattform angesehen werden, denn sie ist diejenige, auf der das gebildete Formteil ruht. Diese durchsichtige Platte kann durch die weitere Belichtungsquelle durchleuchtet werden. Die gegenüberliegende Platte mit der Maske kann entfernt werden, Photopolymer nachgeführt werden, die Platte wieder platziert werden und erneut ein Belichtungsschritt durchgeführt werden, wobei dieser Schritt auch mehrfach wiederholbar sein soll. Nach aufeinanderfolgenden Schritten von Nachführen von Polymer und erneuter Belichtung jeweils die Höhe der, Stützen, die die obere Platte 13 tragen, erhöht wird, um so den nachfolgenden Aufbau weiterer Schichten in die Höhe zu ermöglichen. Ein derartiges Verfahren zum generativen Aufbau eines Formkörpers ist nicht automatisierbar, da die Platten und Masken immer wieder manuell abgenommen, die Höhe der Träger manuell geändert werden muss und die Maske und Platte schließlich oben wieder aufgesetzt werden müssen.

Es ist Aufgabe der vorliegenden Erfindung, ein aufbauendes Verfahren zur Verarbeitung lichtpolymerisierbarer Materialen zum Aufbau von Formkörpern unter Anwendung einer lithographischen schnellen Prototypenbauweise so zu verbessern, dass damit auch höher viskose lichtpolymerisierbare Materialien, insbesondere keramikgefüllte Photopolymere, besser verarbeitet werden Können.

Zur Lösung dieser Aufgabe dient das Verfahren nach Patentanspruch 1. Vorteilhafte Ausführungsformen sind in den abhängigen Ansprüchen und Vorrichtungen zur Durchführung des Verfahrens in den Ansprüchen 8 bis 16 aufgeführt.

In einer Vorrichtung zur Durchführung des Verfahrens ist die projizierende Belichtungseinheit unterhalb des Wannenbodens zur Belichtung des wenigstens teilweise lichtdurchlässigen Wannenbodens von unten angeordnet; entsprechend ist dann die weitere Belichtungseinheit hinter der von dem Wannenboden abgewandten Seite der Bauplattform oberhalb davon angeordnet, um die Bauplattform von oben aus zu belichten.

Es Kann in dem Hubmechanismus ein mit der Steuereinheit verbundener Kraftaufnehmer vorhanden Sein dazu in der Lage ist, die von dem Hubmechanismus auf die Bauplattform ausgeübte Kraft zu messen und das Messergebnis an die Steuereinheit zu senden, wobei die Steuereinheit dazu vorbereitet ist, die Bauplattform mit einem vorgegebenen Kraftverlauf zu bewegen. Insbesondere bei keramikgefüllten lichtpolymerisierbaren Materialien können aufgrund der hohen Viskosität beim Herunterfahren in das oder beim Herauffahren der Bauplattform aus dem viskosen Material große Kräfte auftreten, die durch das Verdrängen beziehungsweise Ansaugen des viskosen Materials zwischen Bauplattform und Wannenboden bedingt sind. Um die auftretenden Kräfte zu beschränken und dennoch eine möglichst hohe Absenk- beziehungsweise Anhebegeschwindigkeit zu ermöglichen, was den Produktionsprozess insgesamt beschleunigt, kann die Steuereinheit durch eine Kraftmessung den Hubmechanismus in optimaler Weise kraftgesteuert einsetzen.

In der Vorrichtung Können als Lichtquelle der projizierenden Belichtungseinheit und/oder der weiteren Belichtungseinheit Leuchtdioden eingesetzt sein Herkömmlich wurden bei Stereolithographieprozessen mit Maskenprojektion Quecksilberdampflampen eingesetzt, was aber Nachteile mit sich bringt, da die Leuchtdichte solcher Quecksilberdampflampen zeitlich und räumlich in beträchtlichem Ausmaß variieren kann, was häufig zu wiederholende Kalibrationen erforderlich machte. Daher ist der Einsatz von Leuchtdioden bevorzugt, die räumlich und zeitlich deutlich geringere Intensitätsvariationen zeigen. Gleichwohl Kann die Vorrichtung dazu vorbereitet, sein in vorgegebenen Intervallen automatisch eine Korrektur oder Kompensation von Intensitätsvariationen durchzuführen. Dazu kann vorgesehen sein, dass die Belichtungseinheit einen Referenzsensor aufweist, der als ein das gesamte Belichtungsfeld abtastender Photosensor oder als eine das gesamte Belichtungsfeld erfassende CD-Kamera ausgebildet ist. Die Steuereinheit ist dazu vorbereitet, in einem Kalibrationsschritt das Belichtungsfeld mit einer vorgegebenen Intensität zu belichten und das von dem Referenzsensor erfasste Intensitätsmuster zur Berechnung einer ortsabhängigen Kompensation zu verwenden, deren Anwendung eine gleichmäßige Intensität im gesamten Belichtungsfeld ergibt.

Die projizierende Belichtungseinheit und die weitere Belichtungseinheit sind vorzugsweise zur Emission von Licht mit einer mittleren Intensität von 1 mW/cm² bis 2000 mW/cm², insbesondere 5 mW/cm² bis 50 mW/cm², ausgelegt.

Die projizierende Belichtungseinheit Kann einen räumlichen Lichtmodulator auf weisen, insbesondere ein von der Steuereinheit angesteuertes Mikrospiegelfeld.

Die projizierende Belichtungseinheit Kann weiterhin zumindest einen Referenzsensor aufweisen, der als ein das gesamte Belichtungsfeld abtastender Photosensor oder als eine das gesamte Belichtungsfeld erfassende CCD-Kamera ausgebildet ist, wobei die Steuereinheit dazu vorbereitet ist, in einem Kalibrationsschritt das Belichtungsfeld mit einem über das ganze Belichtungfeld homogenen Ansteuerungssignal zu belichten und das von dem Referenzsensor erfasste Intensitätsmuster zur Berechnung einer Kompensationsmaske zur Erzielung einer gleichmäßigen Intensität im gesamten Belichtungsfeld zu verwenden. Die Kompensationsmaske liefert ortsabhängig im Belichtungsfeld eine Beziehung zwischen der die Belichtungseinheit ansteuernden Signalamplitude und der jeweils daraus resultierenden tatsächlichen Intensität. Dadurch können zeitabhängig oder permanent auftretende Variationen der örtlichen Intensitätsverteilung im Belichtungsfeld kompensiert werden, indem die projizierende Belichtungseinheit von der Steuereinheit mit einer zu der im letzten Kalibrationsschritt erfassten Kompensationsmaske inversen Normierung ortsabhängig gesteuert wird, so dass eine gleichmäßige tatsächliche Intensität im Belichtungsfeld erreichbar ist.

Zur Ausführung dieser Bewegung zwischen aufeinanderfolgenden Belichtungsschritten kann die Wanne mit ihrem Boden um eine zentrale Achse drehbar gelagert sein und durch einen Antrieb zwischen aufeinanderfolgenden Belichtungsschritten um einen vorgegebenen Winkel gedreht werden. Die projizierende Belichtungseinheit und die darüberliegende Bauplattform liegen radial gegenüber der zentralen Achse nach außen versetzt, so dass bei aufeinanderfolgenden Belichtungsschritten und dazwischen erfolgenden Drehbewegungsschritten schließlich ein Kreisringform des Wannenbodens überstrichen wird. Die Aufbringvorrichtung, z.B. Rakel oder Rolle oder Kombinationen daraus, liegt dann in Bewegungsrichtung vor der projizierenden Belichtungseinheit, so dass der Belichtungsprozess nach Einwirken der Aufbringvorrichtung auf die Materialschicht erfolgt. Es können noch mehrere Rakel oder Rollen oder Kombinationen davon vorgesehen sein, um eine glattstreichende und eine walzende Einwirkung auf die Schicht zu nehmen. Die Aufbringvorrichtung kann insbesondere auch von einer Kante eines Ausgabekanals der Zufuhreinrichtung gebildet sein, die in einstellbarer Höhe über dem Wannenboden liegt.

Das lichtpolymerisierbare Material kann zum Beispiel aus einer Zufuhreinrichtung, zum Beispiel einem Reservoir, in die Wanne mit dem teilweise lichtdurchlässigen Boden ausgegeben werden, wobei die Belichtung von unten durch den lichtdurchlässigen Boden erfolgt. Zwischen aufeinanderfolgenden Belichtungsschritten zur Bildung von aufeinanderfolgenden Schichten wird der Boden relativ zu Belichtungseinheit und Bauplattform bewegt. Während des Belichtungsschrittes ruht die Wanne in Bezug auf die Belichtungseinheit und die Bauplattform.

Durch geeignete Wahl der Größe der Bewegungsschritte der Wanne können Strategien durchgeführt werden, die es erlauben, den Wannenboden an immer neuen Stellen zu belichten, so dass ein Anhaften des lichtpolymerisierbaren Materials am Wannenboden durch mehrfaches Belichten an derselben Stelle des Wannenbodens reduziert werden kann. Bei einer Drehbewegung der Wanne ist. z.B. das Verhältnis Vollkreis (360°) zum Drehwinkelschritt vorzugsweise nicht ganzzahlig, insbesondere auch keine rationale Zahl. Alternativ können die Drehwinkelschritte auch in vorgegebener oder zufälliger Weise variiert werden, so dass die Polymeristation in immer anderen Bereichen der Wanne erfolgt.

In einer bevorzugten Ausführungsform sind eine Mehrzahl von Wannen, denen jeweils eine Zufuhreinrichtung für eines aus einer Mehrzahl von lichtpolymerisierbaren Materialien zugeordnet ist, und ein Antrieb vorhanden sind, der in der Lage ist, gesteuert durch die Steuereinheit jeweils eine der Wannen in einer ausgewählten vorgegebenen Reihenfolge zwischen die projizierende Belichtungseinheit, die weitere Belichtungseinheit und Bauplattform zu bewegen, wobei diese Bewegung eine lineare Bewegung bei serieller Anordnung mehrerer Wannen oder eine rotierende Bewegung bei der Anordnung mehrerer Wannen entlang einer gekrümmten Bahn ist, wodurch Schichten aus verschiedenen Materialien nach Maßgabe der ausgewählten vorgegebenen Reihenfolge aufgebaut werden können.

Die Unterseite der Bauplattform Kann mit einer Strukturierung z.B. aus Noppen, Rillen oder Nuten verstehen sein, die in oder auf der unteren Oberfläche selbst und/oder in oder auf einer darauf aufgebrachten Beschichtung oder Folie vorgesehen ist. Vorzugsweise wird der wenigstens teilweise lichtdurchlässige Wannenboden durch eine einen Polymerisationsinhibitor enthaltende Folie oder Platte gebildet. Die Bauplattform kann insbesondere aus einem hochtemperaturbeständigen Material bestehen, vorzugsweise aus Zirkoniumoxid, Aluminiumoxid, Saphirglas oder Quarzglas.

Ein erfindungsgemäßes Verfahren der oben genannten Art ist dadurch gekennzeichnet, dass das lichtpolymerisierbare Material an der Unterseite der Bauplattform durch Belichten von unten polymerisiert wird, dass die Bauplattform relativ zu dem Wanneboden nach jedem Belichtungsschritt angehoben wird und dass lichtpolymerisierbares Material unter die zuletzt gebildete Schicht nachgeführt wird, und
dass die Bauplattform nach Nachführung von lichtpolymerisierbarem Material, falls vorhanden mit den daran gebildeten Schichten, wieder in das nachgeführte lichtpolymerisierbare Material abgesenkt wird, so dass lichtpolymerisierbares Material aus dem verbleibenden Zwischenraum zum Wannenboden verdrängt wird, und der Abstand zwischen der abgesenkten unteren Oberfläche und dem Wannenboden in vorgegebener Weise eingestellt wird.

Anschließend wird die Bauplattform mit den daran gebildeten Schichten wieder in das nachgeführte lichtpolymerisierbare Material abgesenkt, so dass lichtpolymerisierbares Material aus dem Zwischenraum verdrängt wird, und der Abstand zwischen der unteren Oberfläche der zuletzt gebildeten Schicht und dem Wannenboden in vorgegebener Weise eingestellt. Auf diese Weise kann durch einen mechanisch präzises Einstellen der Bauplattform über dem Wannenboden die Dicke der zu bildenden Schicht, die dem Abstand zwischen unterer Oberfläche der zuletzt gebildeten Schicht und dem Wannenboden entspricht, präzise eingestellt werden.

Vorzugsweise wird die erste Schicht des lichtpolymerisierbaren Materials an eine an der Unterseite der Bauplattform angeordnete, gegebenenfalls entfernbare Folie oder Beschichtung anpolymerisiert.

Vorzugsweise erfolgt das Verschieben der Bauplattform durch Anheben und/oder Absenken kraftgesteuert nach Maßgabe eines vorgegebenen Kraftverlaufs, d.h. die von dem Hubmechanismus auf die Bauplattform ausgeübte Kraft wird auf vorgegebene Kriterien hin beschränkt. Dadurch können die auftretenden Kräfte, die insbesondere bei höher viskosen Materialien erheblich sein können und die den Aufbau des Formkörpers beschädigen könnten, beschränkt werden und dennoch eine möglichst hohe Absenk- bzw. Anhebegeschwindigkeit der Bauplattform in das bzw. aus dem lichtpolymerisierbaren Material ermöglicht werden, was die Geschwindigkeit des Produktionsprozesses insgesamt optimiert, da immer mit der höchsten Geschwindigkeit, bei der Beschädigungen noch vermieden werden, gearbeitet werden kan.

Vorzugsweise wird lichtpolymerisierbares Material aus einer Zufuhreinrichtung in eine Wanne mit einem wenigstens teilweise lichtdurchlässigen Boden ausgegeben wird, wobei die Belichtung von unten durch den wenigstens teilweise lichtdurchlässig ausgebildeten Wannenboden erfolgt, wobei zwischen aufeinanderfolgenden Belichtungen zur Bildung von aufeinanderfolgenden Schichten der Boden der Wanne relativ zur projizierenden und Belichtungseinheit sowie der weiteren Belichtungseinheit und der Bauplattform bewegt wird, wobei in Bewegungsrichtung vor den Belichtungseinheiten und Bauplattform eine Aufbringvorrichtung, vorzugsweise eine Rakel oder eine Rolle, angeordnet ist, deren Höhe über dem Wannenboden eingestellt wird, um das lichtpolymerisierbare Material auf eine gleichmäßige Schichtdicke zu bringen.

Vorzugsweise ist die Wanne drehbar gelagert ist und wird zwischen aufeinanderfolgenden Schichtaufbauschritten um einen vorgegebenen Winkel um die Drehachse gedreht.

Grundsätzlich kann die Wanne auch seitlich versetzbar gelagert sein und zwischen aufeinanderfolgenden Schichtaufbauschritten um einen vorgegebenen Weg in horizontaler Richtung versetzt werden.

Um den Aufbau von Formkörpern unter Verwendung von verschiedenen Materialien zu ermöglichen, kann in aufeinanderfolgenden Schichtaufbauschritten in einer auswählbaren Reihenfolge eine Mehrzahl von verschiedenen Materialien zum Schichtaufbau verwendet werden, indem eine Mehrzahl von Wanne, denen jeweils eine Zufuhreinrichtung mit einem aus der Mehrzahl von Materialien zugeordnet ist, in einer ausgewählten Reihenfolge zwischen die projizierende Belichtungseinheiten und Bauplattform bewegt wird, wobei diese Bewegung eine lineare Bewegung bei serieller Anordnung mehrerer Wannen oder eine rotierende Bewegung bei Anordnung mehrerer Wannen entlang einer gekrümmten Bahn ist.

In einer bevorzugten Ausführungsform wird für die Herstellung des Formkörpers ein partikelgefülltes, beispielsweise keramikgefülltes, lichtpolymerisierbares Material verwendet wird und aus dem fertigen Formkörper die organischen Bestandteile ausgebrannt werden, bevor der Formkörper gesintert wird. Vorzugsweise kann der Partikelanteil des lichtpolymerisierbaren Materials aus einer Oxidkeramik oder einer Glaskeramik besteht.

Der mit dem erfindungsgemäßen Verfahren herzustellende Formkörper kann zum Beispiel ein Grünling für eine Dentalrestauration sein, wobei das lichtpolymerisierbare Material in diesem Fall zum Beispiel ein keramikgefülltes Photopolymer sein kann. Die Bauplattform weist vorzugsweise eine Platte aus einem hochtemperaturbeständigen Material auf, vorzugsweise aus Zirkonoxid, Aluminiumoxid, Saphirglas oder Quarzglas. Auf einen solchen keramischen Träger kann eine transparente Polymerfolie aufgeklebt sein, um die Bauplattform zu bilden, wobei die Polymerfolie auf der Seite, die mit dem Photopolymer in Kontakt kommt, mit Strukturierungen wie Noppen, Rillen oder dergleichen versehen sein kann, um eine noch bessere Anhaftung des keramikgefüllten Photopolymers zu erreichen. Nach dem sukzessiven Aufbau des Grünlings kann die Bauplattform mit dem daran anhafteten Grünling entnommen und direkt in den Sinterofen eingebracht werden. Beim Entbindern des Bauteils zersetzt sich neben der organischen Harzkomponente auch die Polymerfolie der Bauplattform und der gesinterte Keramikkörper liegt somit nach dem Sintern lose auf der Platte der Bauplattform und kann entnommen werden.

Bei dem erfindungsgemäßen Verfahren zur Herstellung des Formteils Kann, ein Kunststoff verwendet werden, wobei das Formteil nach dessen Herstellung in einer Einbettmasse eingebettet und nach Erstarrung der Einbettmasse ausgebrannt wird und wobei die entstandenen Hohlräume in der Einbettmasse ein anderes Material, insbesondere ein Dentalkeramikmaterial oder Metall oder eine Legierung eingepresst wird.

Bei dem Verfahren kann für die Herstellung des Formteils ein Dentalkomposit verwendet werden und das Formteil nach dessen Herstellung vergütet und anschließend poliert oder lackiert und anschließend vergütet werden.

Bei einem erfindungsgemäßen Verfahren Kann der Keramikanteil des keramikgefüllten Photopolymers aus einer Oxidkeramik oder einer Glaskeramik, insbesondere Zirkoniumoxid, Aluminiumoxid, Lithiumdisilikat, Leuzitglaskeramik, Apatit-Glaskeramik oder Mischungen daraus bestehen.

Die Erfindung wird im Folgenden anhand eines Ausführungsbeispiels mit Bezug auf die Zeichnungen beschrieben, in denen:
- Figur 1: eine seitliche Draufsicht, teilweise im Schnitt auf eine erfindungsgemäße Vorrichtung zeigt,
- Figur 2: eine Draufsicht auf die Vorrichtung aus Figur 1 von oben zeigt,
- Fig. 3 bis 5: zeigen eine Teilansicht der Vorrichtung aus Fig. 1 im Bereich von Bauplattform und Wannenboden in aufeinanderfolgenden Arbeitsschritten,
- Fig. 6: zeigt auf Draufsicht von oben für eine zweite Ausführungsform der Vorrichtung,
- Fig. 7: eine seitliche Draufsicht, teilweise im Schnitt, auf die Vorrichtung der zweiten Ausführungsform aus Fig. 6 zeigt, und
- Fig. 8: eine Draufsicht von oben auf eine dritte Ausführungsform der Vorrichtung zeigt.

Das folgende Ausführungsbeispiel bezieht sich auf die Herstellung eines Grünlings für eine Dentalrestauration.

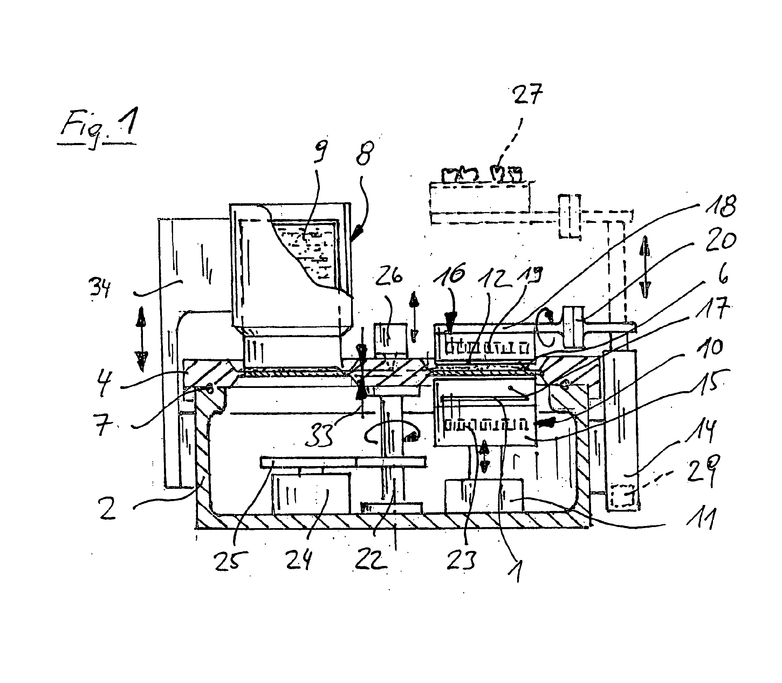

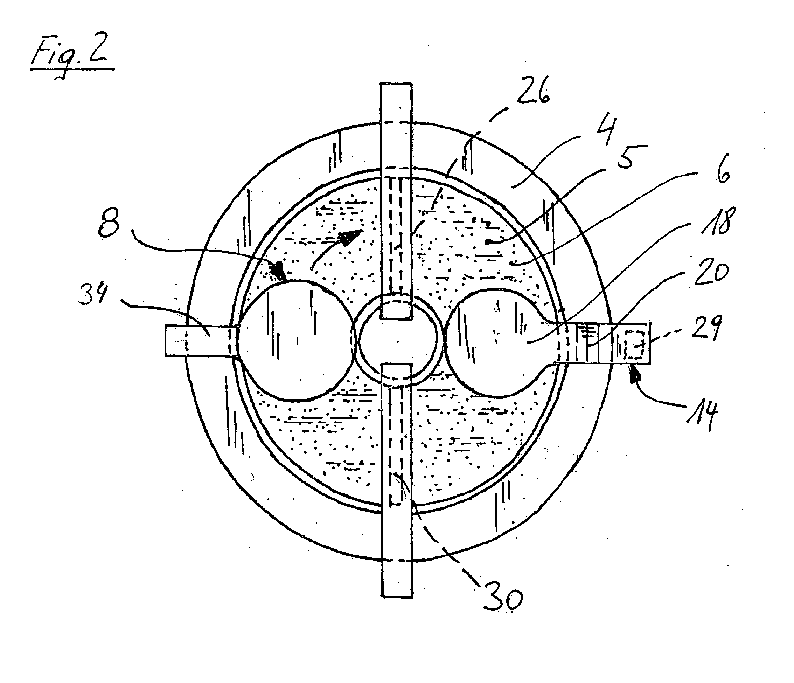

Es werden zunächst mit Bezug auf die Fig. 1 und 2 die Hauptkomponenten der Vorrichtung beschrieben.

Die Vorrichtung weist in der in Fig. 1 und 2 dargestellten Ausführungsform ein Gehäuse 2 auf, das zur Unterbringung und Anbringung der übrigen Komponenten der Vorrichtung dient. Die Oberseite des Gehäuses 2 wird durch eine Wanne 4 bedeckt, die zumindest in den für Belichtungen vorgesehenen Bereichen einen transparenten und ebenen Wannenboden hat.

Unter dem Wannenboden 4 ist in dem Gehäuse 2 eine projizierende Belichtungseinheit 10 vorgesehen, die gesteuert von einer Steuereinheit 11 ein vorgegebenes Belichtungsfeld an der Unterseite des Wannenbodens 6 selektiv mit einem Muster in gewünschter Geometrie belichten kann.

Vorzugsweise weist die projizierende Belichtungseinheit 10 eine Lichtquelle 15 mit einer mehreren Leuchtdioden 23 auf, wobei im Belichtungsfeld vorzugsweise eine Lichtleistung von etwa 15 bis 20 mW/cm² erreicht wird. Die Wellenlänge des von der Belichtungseinheit abgestrahlten Lichts liegt vorzugsweise im Bereich von 400 bis 500 nm. Das Licht der Lichtquelle 15 wird über einen Lichtmodulator 17 ortsselektiv in seiner Intensität moduliert und in dem resultierenden Intensitätsmuster mit gewünschter Geometrie auf das Belichtungsfeld an der Unterseite des Wannenbodens 6 abgebildet. Als Lichtmodulatoren können verschiedene Arten von sogenannten DLP-Chips (digital light processing chips) dienen, wie zum Beispiel Mikrospiegelfelder, LCD-Felder und dergleichen. Alternativ kann als Lichtquelle ein Laser verwendet werden, dessen Lichtstrahl über einen beweglichen Spiegel, der von der Steuereinheit gesteuert werden kann, das Belichtungsfeld sukzessive abtastet.

Über der projizierenden Belichtungseinheit 10 ist jenseits des Wannenbodens 6 eine Bauplattform 12 vorgesehen, die von einem Hubmechanismus 14 mit einem Trägerarm 18 gehalten wird, so dass sie in höhenverstellbarer Weise über dem Wannenboden 6 über der Belichtungseinheit 10 gehalten wird. Die Bauplattform 12 ist ebenfalls transparent oder transluzent.

Über der Bauplattform 12 ist eine weitere Belichtungseinheit 16 angeordnet, die ebenfalls von der Steuereinheit 11 angesteuert wird, um zumindest bei der Bildung der ersten Schicht unter der Bauplattform 12 auch Licht von oben durch die Bauplattform 12 einzustrahlen, um dadurch eine sichere und verlässlich reproduzierbare Polymerisation und Anhaftung der ersten polymerisierten Schicht an der Bauplattform zu erreichen.

Oberhalb der Oberfläche der Wanne 4 ist ferner eine Zufuhreinrichtung 8 mit einem Reservoir in Form einer austauschbare Kartusche 9 gefüllt mit lichtpolymerisierbarem Material vorgesehen. Aus der Zufuhreinrichtung 8 kann sukzessive unter Steuerung der Steuereinheit 11 keramikgefülltes lichtpolymerisierbares Material auf den Wannenboden 6 ausgeben werden. Die Zufuhreinrichtung wird von einem höhenverstellbaren Träger 34 gehalten.

Die Wanne 4 ist an dem Gehäuse 2 mit einem Lager 7 um eine vertikale Achse 22 drehbar gelagert. Es ist ein Antrieb 24 vorgesehen, der von der Steuereinheit 11 angesteuert die Wanne 4 in eine gewünschte Drehstellung einstellt.

In Drehrichtung zwischen Belichtungseinheit 12 und Zufuhreinrichtung 8 kann ein Wischer 30 mit einstellbarer Höhe über dem Wannenboden 6 angeordnet sein, der unterschiedliche Funktionen übernehmen kann, wie weiter unten erläutert.

Wie aus Fig. 2 ersichtlich, liegt zwischen der Zufuhreinrichtung 8 und der Belichtungseinheit 12 oberhalb des Wannenbodens 6 eine Aufbringvorrichtung 26, hier in Form einer Rakel 26, die in einstellbarer Höhe über dem Wannenboden 6 positionierbar ist, um so Material, das aus der Zufuhreinrichtung 8 auf den Wannenboden 6 ausgegeben worden ist, glattzustreichen, bevor es die Belichtungseinheit 12 erreicht, um dadurch eine gleichmäßige und vorgegebene Schichtdicke sicherzustellen. Alternativ oder zusätzlich zu der Rakel können eine oder mehrere Walzen oder weitere Rakel zu der Aufbringvorrichtung gehören, um in glättender Weise auf die Materialschicht einzuwirken.

Der die Bauplattform 12 tragende Schwenkarm 18 ist über ein Drehgelenk 20 mit dem vertikal verschiebbaren Teil des Hubmechanismus 14 verbunden. In dem Hubmechanismus 14 ist ferner ein Kraftaufnehmer 29 vorgesehen, der die von dem Hubmechanismus 14 beim Absenken bzw. Anheben der Bauplattform 12 auf diese ausgeübte Kraft misst und das Messergebnis zu der Steuereinheit 12 sendet. Diese ist wie weiter unten beschrieben dazu ausgestaltet, um den Hubmechanismus 14 nach eine vorgegebenen Kraftverlauf zu steuern, z.B. die auf die Bauplattform 12 ausgeübte Kraft auf einem Maximalwert zu begrenzen.

Die Funktionsweise der in den Figuren 1 und 2 dargestellten Vorrichtung kann zusammenfassend folgendermaßen beschrieben werden. Aus der Zufuhreinrichtung 8 wird gesteuert durch die Steuereinheit eine vorgegebene Materialmenge von keramikgefülltem lichtpolymerisierbaren Material 5 auf den Wannenboden 6 ausgegeben. Durch Ansteuerung des Antriebs 24 veranlasst die Steuereinheit 11 eine Drehung des Wannenbodens 6 um die Drehachse 22, so dass das ausgegebene Material die Aufbringvorrichtung 26, hier einer Rakel, passiert, die das lichtpolymerisierbare Material auf eine vorgegebene Schichtdicke 32 glättet, die durch die Höheneinstellung der Aufbringvorrichtung 26 bestimt wird. Weiter wird das Material durch Drehung der Wanne 4 bis in den Bereich zwischen der Bauplattform 12 und der Belichtungseinheit 10 bewegt.

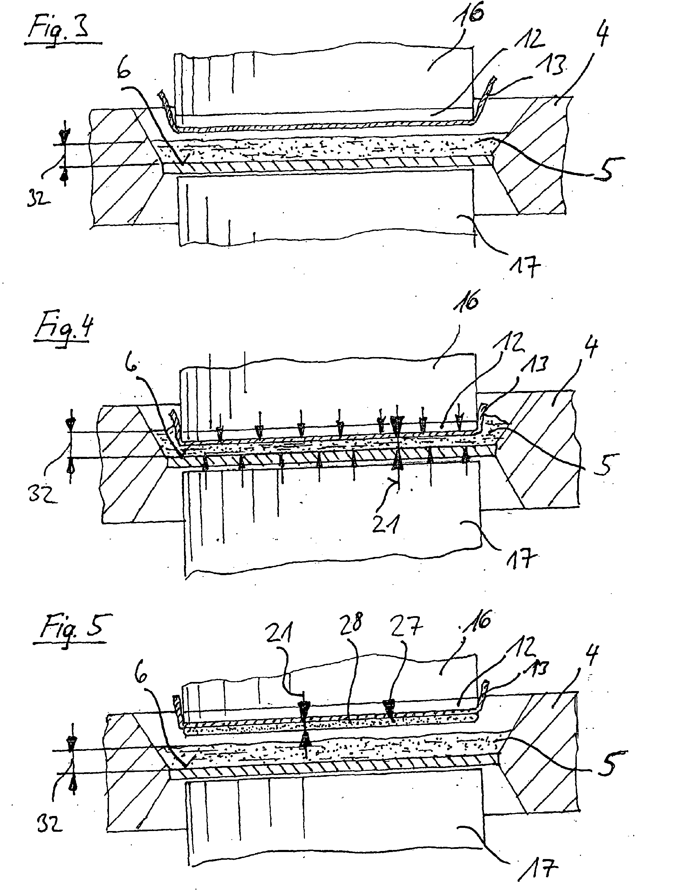

Hier folgt nun, nach Stoppen der Drehbewegung der Wanne 4, das Absenken der Bauplattform 12 in die auf dem Wannenboden 6 gebildete Schicht aus lichtpolymerisierbaren Material 5, was im Folgenden anhand der Fig. 3 bis 5 erläutert wird. In dem in Fig. 3 gezeigten Zustand ist auf dem Wannenboden eine Schicht aus lichtpolymerisierbaren Material 5 mit einer vorgegebenen Dicke 32 gebildet, wobei sich die Bauplattform 12 in diesem Zustand noch oberhalb der Schicht 5 befindet. An der Unterseite der Bauplattform 12 ist eine Folie 13 angebracht, auf die weiter unten eingegangen wird. Aus dem in Fig. 3 dargestellten Zustand erfolgt nun ein Absenken der Bauplattform 12 durch den von der Steuereinheit 11 gesteuerten Hubmechanismus 14, so dass die Bauplattform 12 mit der Folie 13 an der Unterseite in die Schicht aus lichtpolymerisierbaren Material 5 eintaucht und dieses bei weiterem Absenken teilweise aus dem Zwischenraum zwischen der Folie 13 und der oberen Oberfläche des Wannenbodens 6 verdrängt. Durch den Hubmechanismus 14 wird die Bauplattform 12 von der Steuereinheit 11 gesteuert so zu dem Wannenboden abgesenkt, dass eine Schicht mit einer präzise vorgegebenen Schichtdicke 21 zwischen Bauplattform und Wannenboden definiert wird. Dadurch lässt sich die Schichtdicke 21 des zu polymerisierenden Materials präzise steuern.

Beim Eintauchen der Bauplattform 12 in das lichtpolymerisierbare Material 5 und dem weiteren Absenken in die in Fig. 4 gezeigte Stellung könnten insbesondere bei Verdrängung von höher viskosem Material große Kräfte auftreten, wenn das Absenken der Bauplattform mit vorgegebener Geschwindigkeit erfolgen würde. Um zu verhindern, dass die aufzubauenden Materialschichten beim Absenken der Bauplattform 12 in das lichtpolymerisierbare Material 5 zu großen Kräften ausgesetzt ist, ist in dem Hubmechanismus der oben erwähnte Kraftaufnehmer 29 vorhanden, der die auf die Bauplattform 12 ausgeübte Kraft misst und das Messsignal an die Steuereinheit 11 sendet. Diese ist nur dazu vorbereitet, den Hubmechanismus so zu steuern, dass die von dem Kraftaufnehmer 29 erfasste Kraft vorgegebenen Kriterien folgt, insbesondere dass die ausgeübte Kraft eine vorgegebene Maximalkraft nicht überschreitet. Dadurch kann das Absenken der Bauplattform 12 das lichtpolymerisierbare Material 5 hinein und das Anheben der Bauplattform daraus heraus einerseits so gesteuert durchgeführt werden, dass die auf die Bauplattform damit auch auf die bereits gebildeten Schichten ausgeübten Kräfte begrenzt werden und dadurch Beschädigungen beim Aufbau des Formkörpers vermieden werden, und andererseits das Absenken und Anheben der Bauplattform 12 mit der maximal möglichen Geschwindigkeit, bei der Beschädigungen des aufzubauenden Formkörpers gerade noch vermieden werden, durchgeführt werden können, um so eine optimale Prozessgeschwindigkeit zu erreichen.

Nach dem Absenken der Bauplattform in das lichtpolymerisierbare Material 5 in die in Fig. 4 gezeigte Stellung folgt nun der erste Belichtungsschritt zur Polymerisation der ersten Schicht 28 an der Bauplattform 12, wobei dabei erfindungsgemäß auch die weitere Belichtungseinheit 16 betätigt wird (gleichzeitig oder zeitlich versetzt), um ein sicheres Anhaften der ersten Polymerisationsschicht 28 an der Bauplattform zu gewährleisten. Während des Belichtungsprozesses bleibt die Wanne 4 ruhig gehalten, d.h. der Antrieb 24 bleibt abgeschaltet. Nach dem Belichten einer Schicht wird die Bauplattform 12 durch den Hubmechanismus 14 angehoben. Dabei wird vorzugsweise aber zunächst vor dem Anheben der Bauplattform 12 eine relative Kippbewegung zwischen der Bauplattform 12 und dem Wannenboden 6 durchgeführt. Diese leichte Kippbewegung soll zu einer mechanisch wenig belastenden Ablösung der zuletzt polymerisierten Schicht des Formkörpers 27 vom Wannenboden 6 dienen. Nach dieser Kippbewegung und Ablösung der zuletzt gebildeten Schicht wird die Transportplattform um eine vorgegebene Strecke angehoben, wie in Fig. 5 gezeigt, so dass die zuletzt gebildete Schicht an dem Formkörper 27 über dem lichtpolymerisierbaren Material 5 liegt.

Anschließend wird wieder Material aus der Zufuhreinrichtung 8 ausgegeben und die Wanne 4 durch den Antrieb 24 um einen vorgegebenen Drehwinkel gedreht, wobei das sich an der Rakel vorbeibewegende Material wieder auf eine einheitliche Schichtdikke gebracht wird. Diese Schrittfolge wird unter Bildung von aufeinanderfolgenden Schichten vorgegebener Konturform solange fortgesetzt, bis die Aufeinanderfolge von Schichten mit jeweils vorgegebener Geometrie die gewünschte Form des keramischen Grünlings ergibt.

Der hinter der Belichtungseinheit vorgesehene Wischer 30 über dem Wannenboden 6 kann verschiedene Funktionen haben. Er kann zum Beispiel, wenn er ganz auf den Wannenboden 6 abgesenkt ist, dazu dienen, das Material von dem Wannenboden zu sammeln und abzuleiten oder in die Zufuhreinrichtung 8 zurückzuführen, was am Ende eines Bauprozesses erfolgen sollte. Während eines Bauprozesses dient der Wischer 30, wenn er leicht gegenüber dem Wannenboden 6 angehoben ist, dazu, das Material wieder zu verteilen, insbesondere wieder Material in die "Löcher" zu schieben, die durch einen Belichtungsprozess in der Materialschicht nach Anheben der Bauplattform 12 entstanden sind.

Nach der Beendigung eines Bauprozesses kann die Bauplattform 12 mit der darüber angebrachten Belichtungseinheit 16 insgesamt durch Schwenken des Schwenkarms 18 um das Gelenk 20 nach oben geschwenkt werden, wie in Figur 1 gestrichelt angedeutet ist. Danach besteht besser Zugang zu der Wanne 4, um diese zum Beispiel reinigen oder austauschen zu können.

Nach dem beschriebenen Aufbau des Grünlings aus polymerisiertem keramikgefüllten Material muss dieser aus der Vorrichtung entnommen und einem Brennofen zugeführt werden, in dem durch die Temperaturbehandlung eine Zersetzung des polymerisierten Bindemittels (Entbindern) herbeigeführt und eine Sinterung des Keramikmaterials durchgeführt wird. Zur Vereinfachung der Handhabung des aufgebauten Körpers ist die Bauplattform so gestaltet, dass sie von dem Trägerarm 18 leicht lösbar ist. Dann kann die Bauplattform mit dem daran haftenden aufgebauten keramikgefüllten Formkörper 27 von ihrem Träger 18 abgenommen und in einem Brennofen platziert werden. Um diese bevorzugte einfache Entnahme des aufgebauten Dentalrestaurationskörpers aus keramikgefüllten Polymer zu ermöglichen, muss die Bauplattform aber aus einem hochtemperaturbeständigen Material hergestellt sein, wozu zum Beispiel Zirkonoxid, Aluminiumoxid, Saphirglas oder Quarzglas dienen können. Als Alternative dazu ist eine selbstklebende, transparente Folie möglich, welche auf der dem Photopolymer zugewandten Seite für eine bessere Anhaftung mit Noppen, Rillen, Ritzen etc. strukturiert sein kann, und welche nach dem Bauprozess durch einfaches Ablösen von der Bauplattform oder samt der Bauplattform abgenommen und samt der Folie in den Brennofen zur Entbinderung/Sinterung gegeben werden kann.

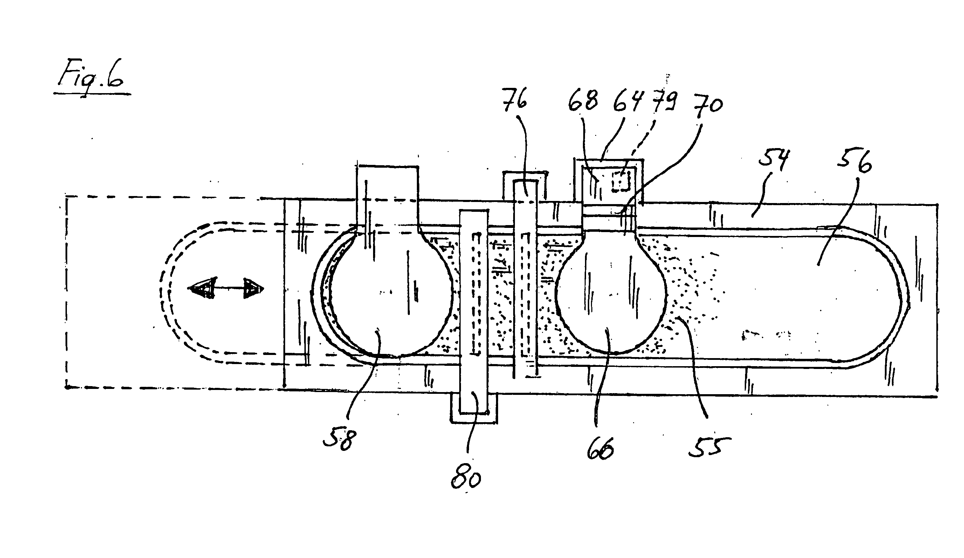

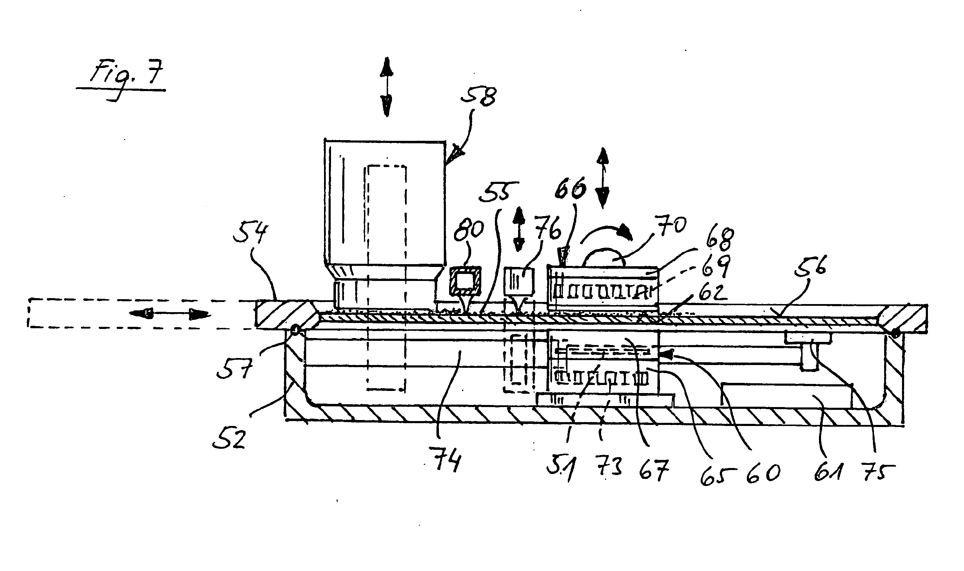

Fig. 6 und 7 zeigen gegenüber der Vorrichtung aus den Fig. 1 und 2 mit drehbarer Wanne eine alternative Ausführungsform, in der die Wanne 54 linear hin und her beweglich ausgestaltet ist. In dieser Ausführungsform ist am Gehäuse 52 eine Wanne 54 linear beweglich in einem Lager 57 gelagert. Oberhalb der Wanne 54 ist die Zufuhreinrichtung 58 in höhenverstellbarer Weise angeordnet. In Bezug auf die lineare Bewegungsrichtung versetzt gegenüber der Zufuhreinrichtung 58 ist oberhalb der Wanne 54 die Bauplattform 62 an einem Schwenkarm 68 gehalten, der zu einem Hubmechanismus 64 gehört. Der Schwenkarm 68 ist wiederum mit einem Drehgelenk 70 versehen, das es ermöglicht, das der Schwenkarm 68 nach Anheben in vertikaler Richtung sich um 180° drehen lässt, wonach die Bauplattform 62 mit dem darauf aufgebauten Formkörper nach oben zeigt und in dieser Stellung leicht gehandhabt werden kann.

Unterhalb der Bauplattform 62 und des Wannenbodens 56 befindet sich die projizierende Belichtungseinheit 60, in der eine Lichtquelle 65 mit Leuchtdioden 73 angeordnet ist. Das Licht der Lichtquelle 65 wird über einen Lichtmodulator 67 und durch den transparenten Wannenboden 56 auf die Bauplattform 62 projiziert. In der projizierenden Belichtungseinheit 60 ist auch ein Referenzsensor 51 vorhanden, der in einem Kalibrationsschritt dazu verwendet wird, um bei Ansteuerung des Lichtmodulators in der Weise, das keine Ortsabhängigkeit oder Modulation über das Belichtungsfeld erfolgen soll, die tatsächliche Intensitätsverteilung in dem Belichtungsfeld aufzunehmen. Aus der Abweichung der tatsächlich erfassten Intensitätsverteilung lässt sich dann durch Umkehrung ein Ansteuerungsprofil (Kompensationsmaske) für den Lichtmodulator berechnen, das für eine tatsächlich gleichmäßige Intensität über das Belichtungsfeld sorgt. Ein entsprechender Referenzsensor 1 ist auch bei der Ausführungsform aus Fig. 1 und 2 vorhanden.

In Bewegungsrichtung der Wanne 54 (angedeutet durch den Doppelpfeil in den Fig. 6 und 7) sind eine höhenverstellbar über dem Wannenboden 56 gehaltene Aufbringvorrichtung 76, hier in Form einer Rakel, deren Unterkante in einstellbarem Abstand zur Oberfläche des Wannenbodens liegt, und ein Wischer 80 angeordnet.

Die Funktionsweise der in den Fig. 6 und 7 gezeigten Vorrichtung entspricht bis auf den Unterschied der linear hin- und hergehenden Bewegung der Wanne 54 anstelle der Drehbewegung der Wanne 4 den zuvor in Bezug auf die Fig. 3 bis 5 beschriebenen Verfahrensschritten. Zunächst wird die Wanne 54 aus der in Fig. 7 gezeigten Stellung, veranlasst durch die Steuereinheit 61, die den Antrieb 75 betätigt, nach links in die durch gestrichelte Linien gezeigte Stellung verschoben. Dabei wird durch die Zufuhreinrichtung 58 lichtpolymerisierbares Material auf den Wannenboden 56 ausgegeben, wobei Menge und zeitlicher Verlauf der Ausgabe ebenfalls von der Steuereinheit 61 vorgegeben werden. Darauf veranlasst die Steuereinheit 61 durch Umkehr des Antriebs 75, dass die Wanne 54 wieder zurück verschoben wird. Dabei passiert das auf den Wannenboden 56 ausgegebene lichtpolymerisierbare Material 55 zunächst den Wischer 80 und dann die Aufbringvorrichtung 76 die für eine gleichmäßige Verteilung und eine einheitliche Schichtdicke des lichtpolymerisierbaren Materials 55 sorgen, bevor dies den Zwischenraum zwischen Bauplattform 62 und projizierender Belichtungseinheit 60 erreicht. Danach wird der Antrieb 75 gestoppt, woraufhin die Schrittfolge wie oben im Zusammenhang mit den Fig. 3 bis 5 beschrieben durchlaufen wird, wobei die Bauplattform 62 in die Schicht aus lichtpolymerisierbaren Material 55 eintaucht und durch Einstellen des Abstands zum Wannenboden eine Schicht mit vorgegebener Dicke zwischen Bauplattform und Wannenboden definiert. Danach erfolgt die Betätigung der projizierenden Belichtungseinheit 60 zur Erzeugung eines Belichtungsmusters mit vorgegebener Geometrie, wobei in diesem Zusammenhang zumindest bei der Erzeugung der ersten Schicht direkt an der Bauplattform 62 auch die weitere Belichtungseinheit 66 mit ihren Leuchtdioden 69 betätigt wird, um eine vollständige Polymerisation und ein verlässliches Anhaften der ersten Schicht an der Bauplattform 62 zu erreichen.

Nach Polymerisation der ersten Schicht mit gewünschter Geometrie wird die Bauplattform 62 durch Betätigen des Hubmechanismus 64 wieder angehoben, so dass die gebildete polymerisierte Schicht über den Spiegel des lichtpolymerisierbaren Materials 55 hinaus angehoben wird.

Daraufhin wiederholt sich die beschriebene Schrittfolge, d.h. die Wanne 54 wird wieder nach links verschoben, lichtpolymerisierbares Material aus der Zufuhreinrichtung 58 abgegeben und dieses beim Zurückschieben der Wanne 54 nach rechts durch Wischer 80 und Aufbringvorrichtung 76 gleichmäßig verteilt, woraufhin nach Abschalten des Antriebs 75 der Hubmechanismus 64 die Bauplattform wieder absenkt, so dass die zuletzt gebildete polymerisierte Schicht in das lichtpolymerisierbare Material 55 eintaucht und auf einen vorgegebenen Abstand über dem Wannenboden gebracht wird, um die nun in dem Zwischenraum liegende Materialschicht im nächsten Belichtungsschritt zu polymerisieren. Die Schrittweite der hin- und hergehenden Bewegung kann natürlich wieder variiert werden, um zu vermeiden, dass die Polymerisation immer über derselben Stelle des Wannenbodens durchgeführt wird.

Der Hubmechanismus 64 ist wiederum mit einem Kraftaufnehmer 79 versehen, dessen Messwerte von der Steuereinheit 61 wie oben im Zusammenhang mit der ersten Ausführungsform beschrieben zur Begrenzung der auf die Bauplattform ausgeübten Kraft beim Absenken und Anheben der Bauplattform verwendet werden.

Vorzugsweise können auch Verfahren angewendet werden, bei denen mehrere verschiedene keramikgefüllte photopolymerisierbare Materialien zum Aufbau des Grünlings verwendet werden. Dies kann zum Beispiel dadurch geschehen, dass eine Mehrzahl von Wannen mit jeweils zugeordnetem Reservoir mit verschiedenen Materialien vorgesehen sind. Diese können dann nach Art eines Wechselträgers zu der Belichtungseinheit und der Bauplattform bewegt werden, um in vorgegebener Reihenfolge verschiedene Materialien zu verarbeiten. Dazu können die mehreren Wannen zum Beispiel seriell hintereinander an einem Träger angeordnet sein, der dann linear bezüglich der Belichtungseinheit und der Bauplattform beweglich ist, um jeweils eine gewünschte Wanne bereitzustellen. Alternativ kann eine Mehrzahl von drehbaren Wannen, von denen eine in den Figuren 1 und 2 dargestellt ist, auf einem Kreisring einer größeren Platte angeordnet sein, die ihrerseits wiederum drehbar ist, um jeweils eine gewünschte Wanne durch Einstellung der Drehstellung der Scheibe in die Position zwischen Belichtungseinheit und Bauplattform zu bringen, in der dann der Polymerisationsschicht der jeweiligen Schicht durchgeführt wird.

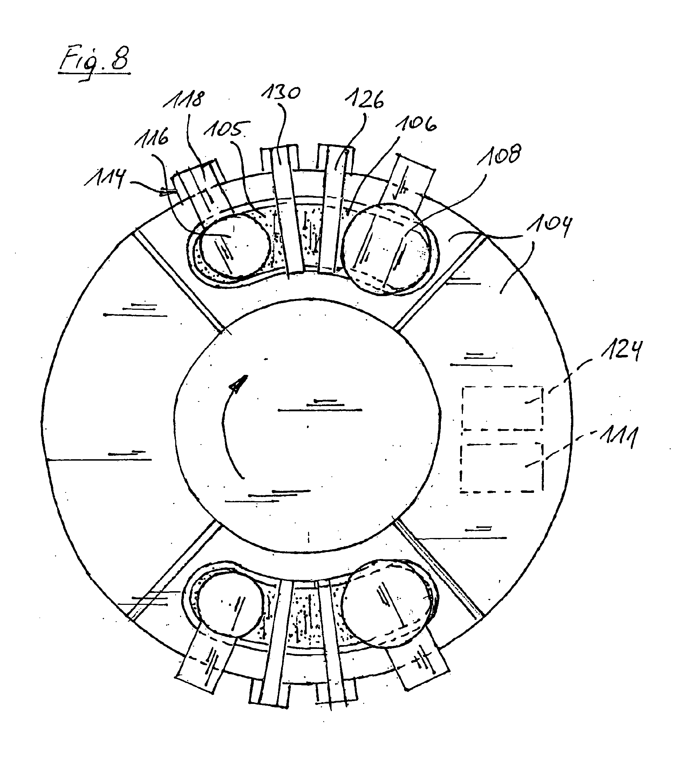

Eine spezielle Ausführungsform einer Vorrichtung, mit der verschiedene lichtpolymerisierbare Materialien zum Aufbau eines Formkörpers verwendet werden können, ist in schematischer Draufsicht von oben in Fig. 8 gezeigt. Hier sind auf einer Drehscheibe in kreisringförmiger Anordnung vier Wannen 104 vorhanden. Die Anordnung von Zufuhreinrichtung 108, der weiteren Belichtungseinheit 116 an einem Hubmechanismus 114 sowie des dazwischen liegenden Wischers 130 und der Aufbringvorrichtung 126 ähnelt weitgehend der Anordnung der Vorrichtung aus den Fig. 6 und 7, mit Ausnahme der Tatsache, dass die Komponenten nicht entlang einer linearen Strecke angeordnet und die Wanne linear beweglich ist, sondern die Komponenten entlang eines Kreisringsegments angeordnet sind und die Wanne entsprechend die Form eines Kreisringsegments hat. Zwischen aufeinanderfolgenden Belichtungsschritten in derselben Wanne 104 wird die Wanne hin- und hergehend um einen Winkel von etwa weniger als 90° bewegt, so dass sich wiederum eine hin- und hergehende Bewegung zwischen Zufuhreinrichtung 118 und der unter der weiteren Belichtungseinheit 108 befindlichen Bauplattform ergibt.

Soll zu einem bestimmten Zeitpunkt eines von den Materialien aus einer der drei übrigen Wannen 104 verwendet werden, wird die Drehscheibe um einen Winkel entsprechend 90°, 180° oder 270° gedreht, um eine der folgenden Wannen zu der gerade betrachteten Vorrichtung zum Aufbau des Formkörpers zu bringen.

Wie in Fig. 8 unten angedeutet, kann an der Drehscheibe im Bereich eines anderen Kreisringsegments eine weitere Vorrichtung zum Aufbau von Formkörpern vorgesehen sein, die parallel zu der oben gezeigten Vorrichtung arbeiten kann.

## Patentansprüche

1. Verfahren zur Verarbeitung von lichtpolymerisierbarem Material (5, 55, 105) zum schichtweisen Aufbau eines Formkörpers (27) unter Anwendung einer lithographiebasierten generativen Fertigungstechnik, z.B. Rapid Prototyping, bei dem
lichtpolymerisierbares Material (5, 55, 105) auf einer Bauplattform (12, 62) in einer Schicht (28) mit vorgegebener Geometrie in einem Belichtungsfeld durch Belichten polymerisiert wird,
die Bauplattform (12, 62) zur Bildung einer nachfolgenden Schicht verschoben wird,
lichtpolymerisierbares Material (5, 55, 105) in eine Wanne (4, 54, 104) im Bereich der zuletzt gebildeten Schicht (28) nachgeführt wird, und
durch Wiederholen der vorhergehenden Schritte schichtweise der Formkörper (27) in der gewünschten Form, die sich aus der Folge der Schichtgeometrien ergibt, aufgebaut wird,
zumindest bei der Polymerisation der ersten Schicht (28) direkt an der Bauplattform (12, 62) eine Einstrahlung von Licht von der der Seite mit der ersten zu polymerisierenden Schicht (28) gegenüberliegenden Seite der Bauplattform (12, 62) erfolgt, wobei die Bauplattform (12, 62) zumindest teilweise lichtdurchlässig ausgeführt ist,
**dadurch gekennzeichnet, dass** das lichtpolymerisierbare Material (5, 55, 105) an der Unterseite der Bauplattform (12, 62) durch Belichten von unten polymerisiert wird, dass die Bauplattform (12, 62) relativ zu dem Wanneboden (6, 56) nach jedem Belichtungsschritt angehoben wird und dass lichtpolymerisierbares Material (5, 55, 105) unter die zuletzt gebildete Schicht (28) nachgeführt wird,
dass die Bauplattform (12, 62) nach Nachführung von lichtpolymerisierbarem Material, falls vorhanden mit den daran gebildeten Schichten, wieder in das nachgeführte lichtpolymerisierbare Material (5, 55, 105) abgesenkt wird, so dass lichtpolymerisierbares Material aus dem verbleibenden
Zwischenraum zum Wannenboden (6, 56) verdrängt wird, und der Abstand zwischen der abgesenkten unteren Oberfläche und dem Wannenboden in vorgegebener Weise eingestellt wird.

2. Verfahren nach Anspruch 1, **dadurch gekennzeichnet, dass** die erste Schicht (28) des lichtpolymerisierbaren Materials (5, 55, 105) an eine an der Unterseite der Bauplattform (12, 62) angeordnete, gegebenenfalls entfernbare Folie (13) oder Beschichtung anpolymerisiert wird.

3. Verfahren nach einem der Ansprüche 1 bis 2, **dadurch gekennzeichnet, dass** das Verschieben der Bauplattform (12,62) durch Anheben und/oder Absenken kraftgesteuert nach Maßgabe eines vorgegebenen Kraftverlaufs erfolgt.

4. Verfahren nach einem der Ansprüche 1 bis 3, bei dem lichtpolymerisierbares Material (5, 55, 105) aus einer Zufuhreinrichtung (8, 58, 108) in eine Wanne (4, 54, 104) mit einem wenigstens teilweise lichtdurchlässigen Boden (6, 56, 106) ausgegeben wird, wobei die Belichtung von unten durch den wenigstens teilweise lichtdurchlässig ausgebildeten Wannenboden (8, 56, 106) erfolgt, wobei zwischen aufeinanderfolgenden Belichtungen zur Bildung von aufeinanderfolgenden Schichten (28) der Boden (6, 56, 106) der Wanne (4, 54, 104) relativ zur projizierenden Belichtungseinheit (10, 60) sowie der weiteren Belichtungseinheit (16, 66, 116) und der Bauplattform (12, 62) bewegt wird, wobei in Bewegungsrichtung vor den Belichtungseinheiten (10, 60; 16, 66, 116) und Bauplattform (12, 62) eine Aufbringvorrichtung (26, 76, 126), vorzugsweise eine Rakel oder eine Rolle, angeordnet ist, deren Höhe über dem Wannenboden (6, 56, 106) eingestellt wird.

5. Verfahren nach Anspruch 4, bei dem die Wanne (4, 104) drehbar gelagert ist und zwischen aufeinanderfolgenden Schichtaufbauschritten um einen vorgegebenen Winkel gedreht wird.

6. Verfahren nach einem der Ansprüche 1-5, bei dem in aufeinanderfolgenden Schichtaufbauschritten in einer auswählbaren Reihenfolge eine Mehrzahl von verschiedenen Materialien (5, 55, 105) zum Schichtaufbau verwendet wird, indem eine Mehrzahl von Wannen (104), denen jeweils eine Zufuhreinrichtung (108) mit einem aus der Mehrzahl von Materialien (5, 55, 105) zugeordnet ist, in einer ausgewählten Reihenfolge zwischen die projizierende Belichtungseinheiten (110, 116) und Bauplattform (112) bewegt wird, wobei diese Bewegung eine lineare Bewegung bei serieller Anordnung mehrerer Wannen oder eine rotierende Bewegung bei Anordnung mehrerer Wannen (104) entlang einer gekrümmten Bahn ist.

7. Verfahren nach einem der Ansprüche 1-6, **dadurch gekennzeichnet, dass** für die Herstellung des Formkörpers (27) ein partikelgefülltes, beispielsweise keramikgefülltes, lichtpolymerisierbares Material (5, 55, 105) verwendet wird und aus dem fertigen Formkörper (27) die organischen Bestandteile ausgebrannt werden, bevor der Formkörper (27) gesintert wird, wobei der Partikelanteil des lichtpolymerisierbaren Materials (5, 55, 105) aus einer Oxidkeramik oder einer Glaskeramik besteht.

8. Vorrichtung zur Verarbeitung von lichtpolymerisierbarem Material (5,55) zum schichtweisen Aufbau eines Formkörpers (27) unter Anwendung einer lithographiebasierten generativen Fertigung, z.B. Rapid Prototyping, nach einem Verfahren nach einem der Ansprüche 1 bis 7, mit
einer Bauplattform (12) zum Aufbau des Formkörpers (27), einer projizierenden Belichtungseinheit (10, 60), die zur ortsselektiven Belichtung einer Fläche auf der Bauplattform (12, 62) mit einem Intensitätsmuster mit vorgegebener Form ansteuerbar ist,
einer Steuereinheit (11, 61), die dazu vorbereitet ist, in aufeinanderfolgenden Belichtungsschritten übereinanderliegende Schichten (28) auf der Bauplattform (12, 62) jeweils mit vorgegebener Geometrie durch Steuerung der projizierenden Belichtungseinheit (10, 60) zu polymerisieren, um so sukzessive den Formkörper (27) in der gewünschten Form, die sich aus der Folge der Schichtgeometrien ergibt, aufzubauen,
einer weiteren Belichtungseinheit (16, 66) zum flächigen Belichten der Bauplattform (12, 62) von der zur projizierenden Belichtungseinheit (10, 60) gegenüberliegenden Seite aus, wobei die Bauplattform (12, 62) wenigstens teilweise lichtdurchlässig ausgebildet ist und dass die Steuereinheit (11, 61) dazu ausgelegt ist, die weitere Belichtungseinheit (16, 66) wenigstens beim Aufbau der ersten Schicht (28), die an der Bauplattform (12, 62) anhaftet, zur Belichtung in vorgegebener Geometrie anzusteuern, wobei wenigstens eine Wanne (4, 54) mit einem wenigstens teilweise lichtdurchlässig ausgebildeten Wannenboden (6, 56) vorhanden ist, in die lichtpolymerisierbares Material (5, 55) einfüllbar ist, **dadurch gekennzeichnet, dass** die Bauplattform (12, 62) mit einem Hubmechanismus (14, 64) über dem Wannenboden (6, 56) gehalten ist, so dass ihre Höhe relativ zum Wannenboden einstellbar ist, und dass die Steuereinheit (11, 61) dazu vorbereitet ist, nach jedem Belichtungsschritt für eine Schicht (28) die Relativposition der Bauplattform (12, 62) zum Wannenboden (6) durch Steuerung des Hubmechanismus anzupassen, indem die Bauplattform (12, 62) nach Nachführung von lichtpolymerisierbarem Material, falls vorhanden mit den daran gebildeten Schichten, wieder in das nachgeführte lichtpolymerisierbare Material (5, 55, 105) abgesenkt wird, so dass lichtpolymerisierbares Material aus dem verbleibenden Zwischenraum zum Wannenboden (6, 56) verdrängt wird, und der Abstand zwischen der abgesenkten unteren Oberfläche der Bauplattform bzw. der zuletzt daran gebildeten Schicht und dem Wannenboden in vorgegebener Weise eingestellt wird.

9. Vorrichtung nach Anspruch 8, **dadurch gekennzeichnet, dass** die projizierende Belichtungseinheit (10, 60) unterhalb des Wannenbodens (6, 56) zur Belichtung durch den wenigstens teilweise lichtdurchlässigen Wannenboden (6, 56) hindurch von unten angeordnet ist und dass die weitere Belichtungseinheit (16) zum Belichten durch die wenigstens teilweise lichtdurchlässige Bauplattform (12, 62) hindurch von oben angeordnet ist.

10. Vorrichtung nach Anspruch 9, **dadurch gekennzeichnet, dass** in dem Hubmechanismus (14, 64) ein mit der Steuereinheit (11, 61) verbundener Kraftaufnehmer (29, 79) vorhanden ist, der in der Lage ist, die von dem Hubmechanismus (14, 64) auf die Bauplattform (12, 62) ausgeübte Kraft zu messen und das Meßergebnis an die Steuereinheit (11, 61) zu senden, wobei die Steuereinheit (11, 61) dazu vorbereitet ist, die Bauplattform (12, 62) mit einem vorgegebenen Kraftverlauf zu bewegen.

11. Vorrichtung nach einem der Ansprüche 8 bis 10, **dadurch gekennzeichnet, dass** die projizierende Belichtungseinheit (10,60) und die weitere Belichtungseinheit (16,66) Licht mit einer mittleren Intensität von 1 mW/cm² bis 2000 mW/cm², insbesondere 5 mW/cm² bis 50 mW/cm² emittieren.

12. Vorrichtung nach einem der Ansprüche 8 bis 11, **dadurch gekennzeichnet, dass** die projizierende Belichtungseinheit (10, 60) einen räumlichen Lichtmodulator (17, 67), insbesondere ein von der Steuereinheit angesteuertes Mikrospiegelfeld (DLP - Digital Light Processor), aufweist.

13. Vorrichtung nach einem der Ansprüche 8 bis 12, **dadurch gekennzeichnet, dass** die projizierende Belichtungseinheit (10, 60) weiterhin zumindest einen Referenzsensor (1, 51) aufweist, der als ein das gesamte Belichtungsfeld abtastender Photosensor oder als eine das gesamte Belichtungsfeld erfassende CCD-Kamera ausgebildet ist, wobei die Steuereinheit (11, 61) dazu vorbereitet ist, in einem Kalibrationsschritt das Belichtungsfeld mit einem über das ganze Belichtungsfeld homogenen Ansteuerungssignal zu belichten und das von dem Referenzsensor (1,51) erfasste Intensitätsmuster zur Berechnung einer Kompensationsmaske zur Erzielung einer gleichmäßigen Intensität im gesamten Belichtungsfeld zu verwenden.

14. Vorrichtung nach einem der Ansprüche 8 bis 13, **dadurch gekennzeichnet, dass** die Wanne (4, 54) in horizontaler Richtung beweglich bezüglich der projizierenden Belichtungseinheit (10, 60) und der Bauplattform (12, 62) ist und dass eine Aufbringvorrichtung (26, 76), beispielsweise eine Rakel oder eine Rolle, deren Höhe über dem Wannenboden (6, 56) einstellbar ist, in Bewegungsrichtung vor Belichtungseinheit (10, 60) und Bauplattform (12, 62) angeordnet ist.

15. Vorrichtung nach Anspruch 14, **dadurch gekennzeichnet, dass** die Wanne (4) um eine zentrale Drehachse(22) drehbar gelagert ist, wobei die projizierende Belichtungseinheit (10) unter dem Wannenboden (6) und die Bauplattform (12) darüber in radialer Richtung versetzt gegenüber der zentralen Drehachse (22) liegen, dass ein Antrieb (24) vorgesehen ist, der in der Lage ist, unter Steuerung der Steuereinheit (11) die Wanne (4) zwischen aufeinanderfolgenden Belichtungsschritten um einen vorgegebenen Winkel um die zentrale Drehachse (22) zu drehen, wobei eine Zufuhreinrichtung (8) zum Ausbringen von lichtpolymerisierbaren Material (5) in die Wanne (4), die Aufbringvorrichtung (26), die Kombination aus Belichtungseinheit (10) und Bauplattform (12) in Bewegungsrichtung aufeinander folgen.

16. Vorrichtung nach einem der Ansprüche 8 bis 15, **dadurch gekennzeichnet, dass** eine Mehrzahl von Wannen (104), denen jeweils eine Zufuhreinrichtung (108) für eines aus einer Mehrzahl von lichtpolymerisierbaren Materialien (105) zugeordnet ist, und ein Antrieb (124) vorhanden sind, der in der Lage ist, gesteuert durch die Steuereinheit (111) jeweils eine der Wannen (104) in einer ausgewählten vorgegebenen Reihenfolge zwischen der projizierenden Belichtungseinheit, der weiteren Belichtungseinheit (116) und Bauplattform zu bewegen, wobei diese Bewegung eine lineare Bewegung bei serieller Anordnung mehrerer Wannen oder eine rotierende Bewegung bei der Anordnung mehrerer Wannen (104) entlang einer gekrümmten Bahn ist.

## Claims

1. A method for processing light-polymerizable material (5, 55, 105) for building up an object (27) in layers, using a lithography-based generative fabrication technique, for example rapid prototyping, in which
light-polymerizable material (5, 55, 105) is polymerized on a build platform (12, 62) in a layer (28) with prescribed geometry by exposure in an exposure area,
the build platform (12, 62) is displaced for the forming of a subsequent layer,
light-polymerizable material (5, 55, 105) is newly fed into a vat (4, 54, 104) in the region of the layer (28) last formed, and
by repeating the previous steps, the object (27) is built up in layers in the desired form, which results from the sequence of the layer geometries,
at least during the polymerization of the first layer (28) directly on the build platform (12, 62), light is irradiated from the side of the build platform (12, 62) opposite to the side with the first layer (28) to be polymerized, the build platform (12, 62) being formed such that it is at least partially transparent,
**characterized in that** the light-polymerizable material (5, 55, 105) on the underside of the build platform (12, 62) is polymerized by exposure from below, **in that** the build platform (12, 62) is raised in relation to the vat bottom (6, 56) after each exposure step and **in that** light-polymerizable material (5, 55, 105) is newly fed under the layer (28) last formed,
**in that** after renewed feeding of light-polymerizable material, the build platform (12, 62) with the layers formed on it, if any are presents, is lowered again into the newly fed light-polymerizable material (5, 55, 105), so that light-polymerizable material is displaced from the remaining intermediate space with respect to the vat bottom (6, 56), and the distance between the lowered lower surface and the vat bottom is set in a prescribed manner.

2. The method as claimed in claim 1, **characterized in that** the first layer (28) of the light-polymerizable material (5, 55, 105) is polymerized onto a, possibly removable, film (13) or coating arranged on the underside of the build platform (12, 62).

3. The method as claimed in either of claims 1 and 2, **characterized in that** the displacement of the build platform (12, 62) takes place by raising and/or lowering under force control in accordance with a prescribed force profile.

4. The method as claimed in any of claims 1 to 3, in which light-polymerizable material (5, 55, 105) is discharged from a feed device (8, 58, 108) into a vat (4, 54, 104) with an at least partially transparent bottom (6, 56, 106), the exposure taking place from below through the vat bottom (6, 56, 106) of an at least partially transparent or translucent form, the bottom (6, 56, 106) of the vat (4, 54, 104) being moved in relation to the projecting exposure unit (10, 60) and the further exposure unit (16, 66, 116) and the build platform (12, 62) between successive exposures for the forming of successive layers (28), there being arranged ahead of the exposure units (10, 60; 16, 66, 116) and the build platform (12, 62) in the direction of movement an application device (26, 76, 126), preferably a doctor blade or a roller, the height of which above the vat bottom (6, 56, 106) is set.

5. The method as claimed in claim 4, in which the vat (4, 104) is rotatably mounted and is turned about a prescribed angle between successive layer building steps.

6. The method as claimed in any of claims 1 to 5, in which a plurality of different materials (5, 55, 105) are used for building up layers in a selectable sequence in successive layer building steps, by a plurality of vats (104), each assigned a feed device (108) with one of the plurality of materials (5, 55, 105), being moved in a selected sequence between the projecting exposure units (110, 116) and the build platform (112), this movement being a linear movement in the case where multiple vats are arranged in series or a rotating movement in the case where multiple vats (104) are arranged along a curved path.

7. The method as claimed in any of claims 1 to 6, **characterized in that** a particle-filled, for example ceramic-filled, light-polymerizable material (5, 55, 105) is used for the production of the object (27) and the organic constituents are burned out from the finished object (27) before the object (27) is sintered, wherein the particle fraction of the light-polymerizable material (5, 55, 105) consists of an oxide ceramic or a glass ceramic.

8. A device for processing light-polymerizable material (5, 55) for building up an object (27) in layers, using lithography-based generative fabrication, for example rapid prototyping, by a method as claimed in one of claims 1 to 7, with
a build platform (12) for building up the object (27),
a projecting exposure unit (10, 60), which can be controlled for position selective exposure of a surface on the build platform (12, 62) with an intensity pattern with prescribed form, and
a control unit (11, 61), which is arranged to polymerize in successive exposure steps layers (28) lying one above the other on the build platform (12, 62), respectively with prescribed geometry, by controlling the projecting exposure unit (10, 60), in order in this way to build up the object (27) successively in the desired form, which results from the sequence of the layer geometries, and
a further exposure unit (16, 66) for exposing the surface area of the build platform (12, 62) from the side opposite from the projecting exposure unit (10, 60), the build platform (12, 62) being formed such that it is at least partially transparent and the control unit (11, 61) being designed to control the further exposure unit (16, 66), at least while building up the first layer (28), which adheres to the build platform (12, 62), for exposure in the prescribed geometry,
there being at least one vat (4, 54) with an at least partially transparently formed bottom (6, 56), into which light-polymerizable material (5, 55) can be filled, **characterized in that** the build platform (12, 62) is held by a lifting mechanism (14, 64) above the vat bottom (6, 56), so that its height in relation to the vat bottom can be set, and **in that** the control unit (11, 61) is arranged to adapt the relative position of the build platform (12, 62) to the vat bottom (6) by controlling the lifting mechanism after each exposure step for a layer (28), by, after renewed feeding of light-polymerizable material, lowering the build platform (12, 62) with the layers formed on it, if any are present, again into the newly fed light-polymerizable material (5, 55, 105), so that light-polymerizable material is displaced from the remaining intermediate space with respect to the vat bottom (6, 56), and so that the distance between the lowered lower surface of the build platform or of the layer last formed on it and the vat bottom is set in a prescribed manner.

9. The device as claimed in claim 8, **characterized in that** the projecting exposure unit (10, 60) is arranged below the vat bottom (6, 56) for exposure through the at least partially transparent vat bottom (6, 56) from below and **in that** the further exposure unit (16) is arranged for exposure through the at least partially transparent build platform (12, 62) from above.

10. The device as claimed in claim 9, **characterized in that** in the lifting mechanism (14, 64), and connected to the control unit (11, 61), there is a force transducer (29, 79), which is capable of measuring the force exerted by the lifting mechanism (14, 64) on the build platform (12, 62) and sending the measurement result to the control unit (11, 61), the control unit (11, 61) being arranged to move the build platform (12, 62) with a prescribed force profile.

11. The device as claimed in one of claims 8 to 10, **characterized in that** the projecting exposure unit (10, 60) and the further exposure unit (16, 66) emit light with an average intensity of 1 mW/cm² to 2000 mW/cm², in particular 5 mW/cm² to 50 mW/cm².

12. The device as claimed in any of claims 8 to 11, **characterized in that** the projecting exposure unit (10, 60) has a spatial light modulator (17, 67), in particular a micromirror array (DLP - Digital Light Processor) controlled by the control unit.

13. The device as claimed in any of claims 8 to 12, **characterized in that** the projecting exposure unit (10, 60) also has at least one reference sensor (1, 51), which is formed as a photosensor scanning the entire exposure area or as a CCD camera recording the entire exposure area, the control unit (11, 61) being arranged to perform in a calibration step an exposure by exposing the exposure area with a control signal that is homogeneous over the entire exposure area and using the intensity pattern recorded by the reference sensor (1, 51) for calculating a compensation mask to achieve a uniform intensity in the entire exposure area.

14. The device as claimed in any of claims 8 to 13, **characterized in that** the vat (4, 54) is movable in a horizontal direction with respect to the projecting exposure unit (10, 60) and the build platform (12, 62) and **in that** arranged ahead of the exposure unit (10, 60) and the build platform (12, 62) in the direction of movement is an application device (26, 76), for example a doctor blade or a roller, the height of which above the vat bottom (6, 56) can be set.

15. The device as claimed in claim 14, **characterized in that** the vat (4) is mounted rotatably about a central axis of rotation (22), the projecting exposure unit (10) lying below the vat bottom (6) and the build platform (12) lying above it, offset in the radial direction with respect to the central axis (22), **in that** a drive (24) is provided and, under the control of the control unit (11), is capable of turning the vat (4) by a prescribed angle about the central axis of rotation (22) between successive exposure steps, a feed device (8) for discharging light-polymerizable material (5) into the vat (4), the application device (26) and the combination of the exposure unit (10) and the build platform (12) are located following one another in the direction of movement.

16. The device as claimed in any of claims 8 to 15, **characterized in that** there are a plurality of vats (104), each of which is assigned a feed device (108) for one of a plurality of light-polymerizable materials (105), and a drive (124), which, under the control of the control unit (111), is capable of moving one of the vats (104) in each case in a selected prescribed sequence between the projecting exposure unit, the further exposure unit (116) and the build platform, this movement being a linear movement in the case where multiple vats are, arranged in series or a rotating movement in the case where multiple vats (104) are arranged along a curved path.

## Revendications

1. Procédé de traitement d'un matériau photopolymérisable (5, 55, 105) permettant de construire couche par couche un corps moulé (27) au moyen d'une technique de fabrication générative basée sur la lithographie, ex. prototypage rapide, dans lequel un matériau photopolymérisable (5, 55, 105) est polymérisé par exposition dans un champ d'exposition en une couche (28) d'une géométrie prédéfinie sur une plateforme de construction (12, 62), la plateforme de construction (12, 62) est déplacée pour former une couche suivante, du matériau photopolymérisable (5, 55, 105) dans une cuve (4, 54, 104) est amené dans la zone de la couche (28) formée en dernier, et le corps moulé (27) est construit couche par couche à la forme souhaitée, laquelle résulte de la succession des géométries de couches, par répétition des étapes précédentes, au moins lors de la polymérisation de la première couche (28) directement sur la plateforme de construction (12, 62), de la lumière est émise depuis le côté opposé au côté de la plateforme de construction (12, 62) présentant la première couche (28) à polymériser, la plateforme de construction (12, 62) étant au moins partiellement transparente, **caractérisé en ce que** le matériau photopolymérisable (5, 55, 105) situé sur le dessous de la plateforme de construction (12, 62) est polymérisé par exposition par le dessous, **en ce que** la plateforme de construction (12, 62) est levée par rapport au fond de cuve (6, 56) après chaque étape d'exposition, et **en ce que** du matériau photopolymérisable (5, 55, 105) est amené sous la couche (28) formée en dernier, **en ce que**, après amenée de matériau photopolymérisable (5, 55, 105), la plateforme de construction (12, 62), le cas échéant avec les couches formées sur elle, est de nouveau abaissée dans le matériau photopolymérisable (5, 55, 105) amené, de sorte que du matériau photopolymérisable (5, 55, 105) est repoussé de l'espace restant vers le fond de cuve (6, 56), et **en ce que** la distance entre la surface inférieure abaissée et le fond de cuve est réglée d'une manière prédéfinie.

2. Procédé selon la revendication 1, **caractérisé en ce que** la première couche (28) du matériau photopolymérisable (5, 55, 105) est polymérisée sur une feuille (13) ou un revêtement, éventuellement amovible, disposé sur le dessous de la plateforme de construction (12, 62).

3. Procédé selon une des revendications 1 à 2, **caractérisé en ce que** le déplacement de la plateforme de construction (12, 62) par levage et/ou abaissement est réalisé de manière commandée par force suivant une courbe de force prédéfinie.

4. Procédé selon une des revendications 1 à 3, dans lequel un matériau photopolymérisable (5, 55, 105) est délivré par un dispositif d'amenée (8, 58, 108) dans une cuve (4, 54, 104) ayant un fond (6, 56, 106) au moins partiellement transparent, l'exposition se faisant par le dessous à travers le fond de cuve (6, 56, 106) au moins partiellement transparent, le fond (6, 56, 106) de la cuve (4, 54, 104) étant, entre des expositions successives, déplacé par rapport à l'unité d'exposition projectrice (10, 60) ainsi que par rapport à l'autre unité d'exposition (16, 66, 116) et la plateforme de construction (12, 62) pour former des couches (28) successives, un dispositif d'application (26, 76, 126), de préférence un racloir ou un rouleau, dont la hauteur au-dessus du fond de cuve (6, 56, 106) est réglable, étant disposé avant les unités d'exposition (10, 60 ; 16, 66, 116) et la plateforme de construction (12, 62) dans la direction de déplacement.

5. Procédé selon la revendication 4, dans lequel la cuve (4, 104) est mobile en rotation et tournée d'un angle prédéfini entre les étapes successives de construction par couches.

6. Procédé selon une des revendications 1 à 5, dans lequel, dans des étapes successives de construction par couches, une pluralité de matériaux différents (5, 55, 105) est utilisée dans un ordre sélectionnable pour la construction par couches, une pluralité de cuves (104), auxquelles est chaque fois associé un dispositif d'amenée (108) d'un parmi la pluralité de matériaux (5, 55, 105), est déplacée dans un ordre sélectionné entre les unités d'exposition projectrices (110, 116) et la plateforme de construction (112), ce déplacement étant un déplacement linéaire si plusieurs cuves sont disposées en série ou un déplacement rotatif si plusieurs cuves (104) sont disposées le long d'une trajectoire courbe.

7. Procédé selon une des revendications 1 à 6, **caractérisé en ce que** l'on utilise pour la fabrication du corps moulé (27) un matériau photopolymérisable (5, 55, 105) chargé en particules, par exemple chargé en céramique, et **en ce que** l'on brûle les composants organiques du corps moulé (27) fini avant de fritter le corps moulé (27), la part de particules du matériau photopolymérisable (5, 55, 105) étant composée d'une céramique oxyde ou d'une vitrocéramique.

8. Dispositif de traitement d'un matériau photopolymérisable (5, 55, 105) permettant de construire couche par couche un corps moulé (27) au moyen d'une technique de fabrication générative basée sur la lithographie, ex. prototypage rapide, selon un procédé selon une des revendications 1 à 7, comprenant une plateforme de construction (112) pour construire le corps moulé (27), comprenant une unité d'exposition projectrice (10, 60) qui peut être commandée en vue de l'exposition localement sélective d'une surface sur la plateforme de construction (112) avec un motif d'intensité de forme prédéfinie, comprenant une unité de commande (11, 61) qui est conçue pour, dans des étapes d'exposition successives, polymériser des couches superposées (28) sur la plateforme de construction (12, 62), chaque fois d'une géométrie prédéfinie, par commande de l'unité d'exposition projectrice (10, 60), afin de construire de façon successive le corps moulé (27) dans la forme souhaitée résultant de la succession des géométries de couches, comprenant une autre unité d'exposition (16, 66) pour l'exposition en nappe de la plateforme de construction (12, 62) depuis le côté opposé à l'unité d'exposition projectrice (10, 60), la plateforme de construction (12, 62) étant au moins partiellement transparente, et l'unité de commande (11, 61) étant conçue pour commander l'autre unité d'exposition (16, 66), en vue d'une exposition selon une géométrie prédéfinie, au moins lors de la construction de la première couche (28) qui adhère à la plateforme de construction (12, 62), au moins une cuve (4, 54) étant prévue avec un fond de cuve (6, 56) au moins partiellement transparent, dans laquelle un matériau photopolymérisable (5, 55) peut être chargé, **caractérisé en ce que** la plateforme de construction (12, 62) est maintenue au-dessus du fond de cuve (6, 56) par un mécanisme de levage (14, 64) de façon que sa hauteur par rapport au fond de cuve soit réglable, et **en ce que** l'unité de commande (11, 61) est conçue pour, après chaque étape d'exposition pour une couche (28), adapter la position relative de la plateforme de construction (12, 62) par rapport au fond de cuve (6) par commande du mécanisme de levage, la plateforme de construction (12, 62), le cas échéant avec les couches formées sur elle, étant, après amenée de matériau photopolymérisable, de nouveau abaissée dans le matériau photopolymérisable (5, 55, 105) amené, de sorte que du matériau photopolymérisable est repoussé de l'espace restant vers le fond de cuve (6, 56) et que la distance entre la surface inférieure abaissée de la plateforme de construction ou de la dernière couche formée sur elle et le fond de cuve est réglée d'une manière prédéfinie.

9. Dispositif selon la revendication 8, **caractérisé en ce que** l'unité d'exposition projectrice (10, 60) est disposée sous le fond de cuve (6, 56) de manière à exposer par le dessous à travers le fond de cuve (6, 56) au moins partiellement transparent, et **en ce que** l'autre unité d'exposition (16) est disposée de manière à exposer par le dessus à travers la plateforme de construction (12, 62) au moins partiellement transparente.

10. Dispositif selon la revendication 9, **caractérisé en ce qu'**un capteur de force (29, 79) relié à l'unité de commande (11, 61) est prévu dans le mécanisme de levage (14, 64), lequel est en mesure de mesurer la force exercée par le mécanisme de levage (14, 64) sur la plateforme de construction (12, 62) et d'envoyer le résultat de mesure à l'unité de commande (11, 61), l'unité de commande (11, 61) étant conçue pour déplacer la plateforme de construction (12, 62) avec une courbe de force prédéfinie.

11. Dispositif selon une des revendications 8 à 10, **caractérisé en ce que** l'unité d'exposition projectrice (10, 60) et l'autre unité d'exposition (16, 66) émettent une lumière d'une intensité moyenne de 1 mW/cm² à 2 000 mW/cm², en particulier de 5 mW/cm² à 50 mW/cm².

12. Dispositif selon une des revendications 8 à 11, **caractérisé en ce que** l'unité d'exposition projectrice (10, 60) présente un modulateur de lumière spatial (17, 67), en particulier une matrice de micromiroirs (DLP - Digital Light Processor) commandée par l'unité de commande.

13. Dispositif selon une des revendications 8 à 12, **caractérisé en ce que** l'unité d'exposition projectrice (10, 60) présente en outre au moins un capteur de référence (1, 51) qui est réalisé sous la forme d'un photodétecteur détectant l'ensemble du champ d'exposition ou sous la forme d'une caméra CCD couvrant l'ensemble du champ d'exposition, l'unité de commande (11, 61) étant conçue pour, dans une étape d'étalonnage, exposer le champ d'exposition avec un signal de commande homogène sur l'ensemble du champ d'exposition et utiliser le motif d'intensité détecté par le capteur de référence (1, 51) pour calculer un masque de compensation permettant d'obtenir une intensité uniforme dans l'ensemble du champ d'exposition.

14. Dispositif selon une des revendications 8 à 13, **caractérisé en ce que** la cuve (4, 54) est mobile en direction horizontale par rapport à l'unité d'exposition projectrice (10, 60) et à la plateforme de construction (12, 62), et **en ce qu'**un dispositif d'application (26, 76), par exemple un racloir ou un rouleau, dont la hauteur au-dessus du fond de cuve (6, 56) est réglable, est disposé avant l'unité d'exposition (10, 60) et la plateforme de construction (12, 62) dans la direction de déplacement.

15. Dispositif selon la revendication 14, **caractérisé en ce que** la cuve (4) est mobile en rotation autour d'un axe de rotation central (22), l'unité d'exposition projectrice (10) sous le fond de cuve (6) et la plateforme de construction (12) au-dessus étant décalées en direction radiale par rapport à l'axe de rotation central (22), **en ce qu'**il est prévu un entraînement (24) qui est en mesure, sous la commande de l'unité de commande (11), de tourner la cuve (4) d'un angle prédéfini autour de l'axe de rotation central (22) entre des étapes d'exposition successives, un dispositif d'amenée (8) permettant de délivrer du matériau photopolymérisable (5) dans la cuve (4), le dispositif d'application (26), la combinaison formée de l'unité d'exposition (10) et de la plateforme de construction (12) se succédant dans la direction de déplacement.

16. Dispositif selon une des revendications 8 à 15, **caractérisé en ce qu'**il est prévu une pluralité de cuves (104), auxquelles est chaque fois associé un dispositif d'amenée (108) d'un parmi une pluralité de matériaux photopolymérisables (5, 55, 105), et un entraînement (124) qui, commandé par l'unité de commande (111), est en mesure de déplacer chaque fois une des cuves (104) dans un ordre prédéfini entre l'unité d'exposition projectrice, l'autre unité d'exposition (116) et la plateforme de construction, ce déplacement étant un déplacement linéaire si plusieurs cuves sont disposées en série ou un déplacement rotatif si plusieurs cuves (104) sont disposées le long d'une trajectoire courbe.
